# EUROPÄISCHE PATENTANMELDUNG

(11) **EP 1 336 463 A1**
(43) Veröffentlichungstag der Anmeldung: **20.08.2003**
(21) Anmeldenummer: 03003027.4
(22) Anmeldetag: 12.02.2003
(51) Int. Cl.: B29C 45/14, A47L 13/42

(54) **Verfahren zur Herstellung eines Mehrkomponenten-Kunststoffteiles sowie Mehrkomponenten-Kunststoffteil**

(30) Priorität: 15.02.2002 DE 10206211; 15.02.2002 DE 20202264 U
(71) Anmelder: Avet AG, 8630 Rüti/Zürich (CH)
(72) Erfinder: Sacks, Roland, 8608 Bubikon (CH)
(74) Vertreter: Maucher, Wolfgang, Dipl.-Ing.

(57) **Zusammenfassung**

Die Erfindung betrifft ein Verfahren zur Herstellung eines Mehrkomponenten-Kunststoffteiles, bei dem in einem ersten Verfahrensschritt eine die Außenhaut des Kunststoffteiles bildende Kunststoff-Folie in ein formgebendes Werkzeug eingelegt und in einem nachfolgenden Verfahrensschritt mit zumindest einem, andere Materialeigenschaften aufweisenden Kunststoff-Material hinterspritzt wird. Für das erfindungsgemäße Verfahren ist kennzeichnend, dass das Kunststoffteil als Reinigungshandwagen, Wascheimer, Flachmophalter oder dergleichen Reinigungsgerät ausgebildet ist und dass die Kunststoff-Folie im Vergleich zum bisherigen hinterspritzten Kunststoff-Material eine höhere Temperaturbeständigkeit und/oder größere Oberflächenhärte hat. Ein im erfindungsgemäßen Verfahren hergestelltes Reinigungsgerät mit einer auch gegenüber hohen Temperaturen beständigen Außenhaut kann nun auch im Autoklaven desinfiziert werden. Durch die hohe Kratzfestigkeit eines Reinigungsgerätes, dass eine Außenhaut mit großer Oberflächenhärte aufweist, kann. dieses Reinigungsgerät wirklich in allen Hygienebereichen wie zum Beispiel in Spitälern, oder keim- und staubfreien Reinräumen, eingesetzt werden.

## Beschreibung

Die Erfindung betrifft ein Mehrkomponenten-Kunststoffteil, das zumindest in einem Teilbereich eine Außenhaut aus einer Folie aus Kunststoff oder einem anderen Material hat, welche Folie mit zumindest einem, andere Materialeigenschaften aufweisenden Kunststoff-Material hinterspritzt ist.

Solche folienhinterspritzten Kunststoffteile werden in der Automobilindustrie beispielsweise als Karosserieteile verwendet. So kennt man aus der DE 199 51 785 A1 bereits ein Verfahren zum Herstellen eines in verschiedenen Teilbereichen verschiedenfarbigen Kunststoffteiles, welches insbesondere als Außenhautteil einer Fahrzeugkarosserie bestimmt ist. Bei dem vorbekannten Verfahren wird die als Außenhaut des Kunststoffteiles vorgesehene Kunststoff-Folie in einem ersten Verfahrensschritt in ein formgebendes Werkzeug eingelegt, um in einem nachfolgenden Verfahrenschritt gegebenenfalls in verschiedenen Teilbereichen mit unterschiedlich eingefärbtem Kunststoff-Material hinterspritzt zu werden.

Der vorliegende Erfindungsvorschlag sieht nun vor, dass das Kunststoffteil als Reinigungshandwagen, Wascheimer, Flachmophalter oder dergleichen Reinigungsgerät ausgebildet ist und dass die verwendete Folie im Vergleich zum hinterspritzten Kunststoff-Material eine höhere Temperaturbeständigkeit und/oder größere Oberflächenhärte hat. Dabei kann die Folie ebenfalls aus einem Kunststoff oder aus einem anderen Material, beispielsweise aus Edelstahl, hergestellt sein. Durch die homogene Oberfläche einer solchen Folie, die sich gegenüber dem hinterspritzten Kunststoff-Material durch ihre höhere Temperaturbeständigkeit und/oder größere Oberflächenhärte beziehungsweise -dichte auszeichnet, wird gegenüber normalen mikroporösen Kunststoff-Oberflächen der Bakterienbefall reduziert oder vermieden. Dadurch wird einer Bakterienverschleppung zum Beispiel im Hospitalbereich vorgebeugt und ein Hospitalismus auf ein Minimum reduziert.

Die vorliegende Erfindung setzt das bislang nur in der Automobilindustrie verwendete Verfahren zur Herstellung folienhinterspritzter Kunststoffteile ein, um nun erstmals ein Reinigungsgerät, wie beispielsweise einen Reinigungshandwagen, einen Flachmophalter oder einen Wascheimer, herzustellen. Dabei wird eine die Außenhaut des späteren Kunststoffteiles bildende Folie verwendet, die sich im Vergleich zum hinterspritzten Kunststoff-Material durch eine höhere Temperaturbeständigkeit und/oder größere Oberflächenhärte beziehungsweise -dichte auszeichnet.

Da derartige Reinigungsgeräte bislang aus thermoplastischen Kunststoffen hergestellt werden, die nur eine vergleichsweise geringe Temperaturbeständigkeit haben, sind diese Reinigungsgeräte meist nicht autoklavierbar. Ein im erfindungsgemäßen Verfahren hergestelltes Reinigungsgerät mit einer auch gegenüber hohen Temperaturen beständigen Außenhaut kann demgegenüber nun auch im Autoklaven desinfiziert werden.

Weist die als Außenhaut vorgesehene Folie zusätzlich oder stattdessen eine größere Oberflächenhärte auf, ist das Reinigungsgerät praktisch verschleißfrei einzusetzen und zeichnet sich dementsprechend durch eine hohe Wirtschaftlichkeit aus. Durch die hohe Kratzfestigkeit einer solchen Folie sind derartige, als folienhinterspritzte Kunststoffteile ausgebildeten Reinigungsgeräte in allen Hygienebereichen, wie zum Beispiel in Spitälern, oder keim- und staubfreien Reinräumen, einsetzbar.

## Patentansprüche

1. Verfahren zur Herstellung eines Mehrkomponenten-Kunststoffteil, das zumindest in einem Teilbereich eine Außenhaut aus einer Folie aus Kunststoff oder einem anderen Material hat, welche Folie mit zumindest einem, andere Materialeigenschaften aufweisenden Kunststoff-Material hinterspritzt ist, **dadurch gekennzeichnet, dass** das Kunststoffteil als Reinigungshandwagen, Wascheimer, Flachmophalter oder dergleichen Reinigungsgerät ausgebildet ist und dass die Folie im Vergleich zum hinterspritzten Kunststoff-Material eine höhere Temperaturbeständigkeit und/oder größere Oberflächenhärte hat.

2. Mehrkomponenten-Kunststoffteil, das zumindest in einem Teilbereich eine Außenhaut aus einer Kunststoff-Folie hat, welche Kunststoff-Folie mit zumindest einem, andere Materialeigenschaften aufweisenden Kunststoff-Material hinterspitzt ist, **dadurch gekennzeichnet, daß** das Kunststoffteil als Reinigungshandwagen, Wascheimer, Flachmophalter oder dergleichen Reinigungsgerät ausgebildet ist und daß die Oberflächenhärte der Folie so gewählt ist, daß das Reinigungsgerät eine kratzfeste und schmutzabweisende Außenhaut hat.

3. Verfahren oder Kunststoffteil nach Anspruch 1 oder 2, **dadurch gekennzeichnet, dass** die Oberflächenhärte der Kunststoff-Folie so gewählt ist, dass das Reinigungsgerät eine kratzfeste Außenhaut hat.

4. Verfahren oder Kunststoffteil nach einem der Ansprüche 1 bis 3, **dadurch gekennzeichnet, dass** die Temperaturbeständigkeit Folie so gewählt ist, dass das Reinigungsgerät autoklavierbar ist.
